# EUROPEAN PATENT SPECIFICATION

(11) **EP 3 690 296 B1**
(45) Date of publication and mention of the grant of the patent: **11.09.2024**
(21) Application number: 18857813.2
(22) Date of filing: 13.09.2018
(51) Int. Cl.: F16K 47/02, F16K 31/68, F16K 1/14, F16K 47/08

(54) **EXPANSION VALVE**
EXPANSIONSVENTIL
DÉTENDEUR

(30) Priority: 25.09.2017 JP 2017183170
(43) Date of publication of application: 05.08.2020
(73) Proprietor: Fujikoki Corporation, Tokyo 158-0082 (JP)
(72) Inventor: HAYAKAWA, Junya, Tokyo 158-0082 (JP); MATSUDA, Ryo, Tokyo 158-0082 (JP)
(74) Representative: Ter Meer Steinmeister & Partner
(86) International application number: PCT/JP2018/033999
(87) International publication number: WO 2019/059093

(56) References cited:
- JP-A- 2007 162 851
- JP-A- 2007 162 851
- JP-A- 2012 047 393
- JP-A- 2012 047 393
- JP-A- 2013 217 568
- JP-A- S6 095 288
- KR-A- 20160 066 123
- US-A- 4 159 735
- US-A- 4 611 786

## Description

### [Technical Field]

The present invention relates to an expansion valve for use in refrigeration cycles.

### [Background of the Invention]

In general vehicles, in order to provide a comfortable interior environment with less noise, noise reduction during the operation of car air conditioners, for instance, is required. There are various causes of the noise generated by the operation of car air conditioners, but the expansion valve used for refrigeration cycles is sometimes noted as a noise generation source. In this type of expansion valve, the high-pressure refrigerant emits a characteristic operation sound when the high-pressure refrigerant is decompressed by the orifice and travels to the evaporator, and particularly in cases in which the expansion valve is installed on the partition wall that separates the engine compartment from the vehicle compartment, this operation sound is easily transmitted to the inside of the vehicle, such that there is demand for noise reduction. In order to reduce such noise, various proposals have been made regarding expansion valves.
JP 2012047393 A discloses an expansion valve, comprising an inlet port to which the high pressure refrigerant is sent and an outlet port, which are formed at a valve body of the expansion valve. A valve material which controls an opening of a valve hole is arranged at a valve chamber. A throttle member is fixed to the outlet port by a caulking part, rectifies the refrigerant flowing out of the side of an evaporator, and reduces the noise caused by the breakage of an air bubble.
KR 2016 0066123 A discloses an expansion valve for a vehicle air conditioner, wherein a space-expandable rectifying plate member is installed on the downstream high-pressure refrigerant passage of a throttle passage. The space-expandable rectifying plate member includes a rectifying plate body portion and a spacer portion extending from a circumference of one side edge of the rectifying plate body portion.
JP 2013 217568 A discloses an expansion valve wherein a piping member is provided with a squeeze member fitted and adhered to the piping member. The squeeze member has a stepped cylindrical form which has a large diameter attaching part provided at the front end side, and a small diameter part extended in the refrigerant/coolant flow direction of the evaporator.

Patent Document 1 discloses an expansion valve in which a rectifier with a throttle opening is provided in the outlet passage leading toward the evaporator. According to such an expansion valve, when passing through the throttle opening, the air bubbles in the refrigerant are subdivided, thereby reducing the noise caused by the rupturing of these air bubbles.

### [Citation List]

### [Patent Literature]

[Patent Document 1] Japanese Laid-Open Patent Application No. 2013-231571

### [Summary of Invention]

### [Technical Problem]

In addition to the noise caused by the rupture of air bubbles, noise caused by turbulent flow of the refrigerant may occur, but by providing the rectifier, such noise can also be reduced. More specifically, the refrigerant throttled by the orifice of the expansion valve expands until the refrigerant reaches the outlet passage, and then the traveling direction of the refrigerant changes by approximately 90 degrees, which may invite the risk of turbulent flow which causes noise. Therefore, by throttling the expanded refrigerant once again with the rectifier throttle opening, it is possible to prevent the generation of turbulence and to achieve noise reduction. This is referred to as what is known as a "muffler effect".

Incidentally, in order to exhibit a sufficient muffling effect, it is desirable to enlarge the volume of the space through which the refrigerant passes from the orifice to the rectifier as much as possible. On the other hand, in car air conditioners and the like, the miniaturization of components is prioritized, and it is desirable to miniaturize the expansion valve as much as possible. However, if the expansion valve is miniaturized, the volume of the space from the orifice to the rectifier is also restricted, and there is a risk that the muffler effect cannot be sufficiently exhibited.

It is an object of the present disclosure to provide an expansion valve which is compact and can further enhance muffling performance.

### [Solution to Problem]

The invention is defined by an expansion valve according to claim 1.

In order to achieve the above object, the expansion valve according to the present invention includes a valve main body including an inlet passage configured to introduce a high-pressure refrigerant, a valve chamber configured to communicate with the inlet passage, an expansion chamber that includes an orifice configured to reduce a pressure of the refrigerant introduced into the valve chamber, and an outlet passage disposed downstream of the expansion chamber and configured to discharge the refrigerant that passes through the expansion chamber, a rectifier disposed in the valve main body and configured to partition the expansion chamber and the outlet passage, a valve member configured to open and close the orifice, and a valve member driving device configured to drive the valve member, wherein the rectifier includes a hollow convex portion projecting toward the outlet passage and a throttle hole formed at a distal end of the hollow convex portion.

According to the present invention, the hollow convex portion is cylindrical, and has an outer diameter less than an inner diameter of a pipe connected to the outlet passage.

Preferably, at least a portion of the hollow convex portion is disposed inside the pipe.

The rectifier is preferably formed by press forming a metallic plate.

### [Advantageous Effects of Invention]

According to the present disclosure, it is possible to provide an expansion valve which is compact and can further enhance muffling performance.

### [Brief Description of Drawings]

[FIG. 1] Figure 1 is a diagram that schematically illustrates the entire configuration of an expansion valve according to the present embodiment.
[FIG. 2] Figure 2 is an enlarged view of an area AR around the orifice.
[FIG. 3] Figure 3 is a perspective view of the rectifier.
[FIG. 4] Figure 4 is a schematic cross-sectional view that schematically illustrates the application of the expansion valve to a refrigerant circulation system according to the present embodiment.

### [Description of Embodiment(s)]

Referring now to the drawings, an expansion valve 1 according to an embodiment of the present disclosure will be described. It should be noted that in the following description of the embodiments and comparative examples, parts and members having the same functions are denoted by the same reference numerals, and redundant description of parts and members denoted by the same reference numerals is omitted.

### (Definition of Directions)

In this specification, the direction from the valve body 3 to the actuation rod 5 is defined as the "upward direction" and the direction from the actuation rod 5 to the valve body 3 is defined as the "downward direction" on the paper surface of the drawings.

### (Overview of Expansion Valve)

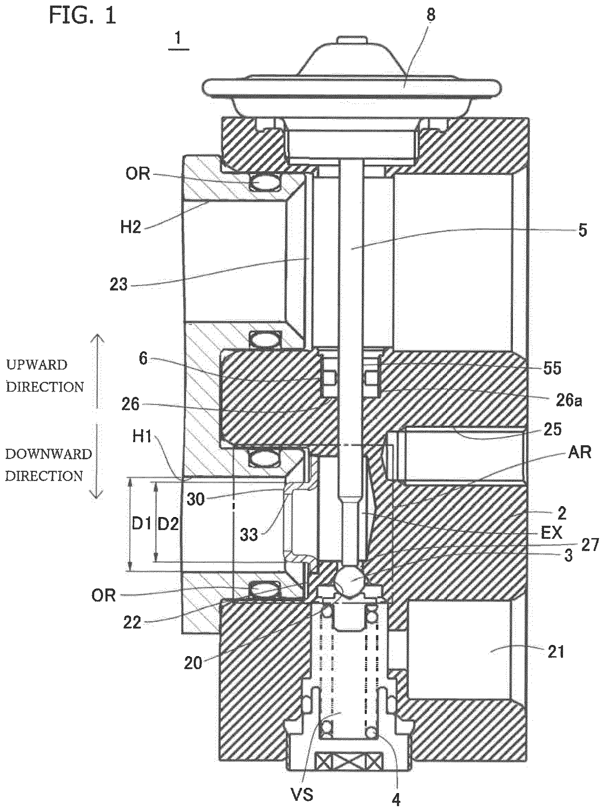

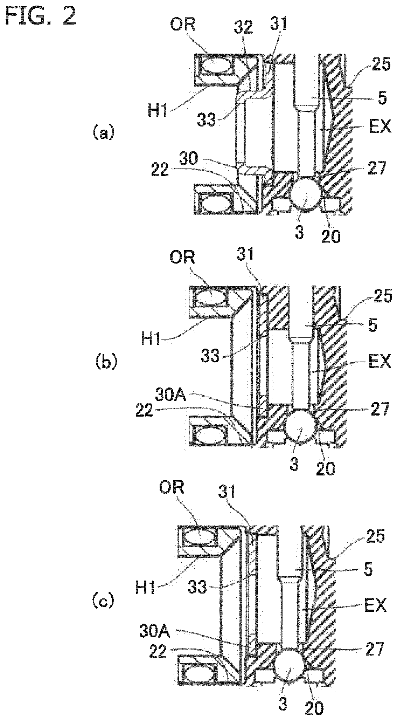

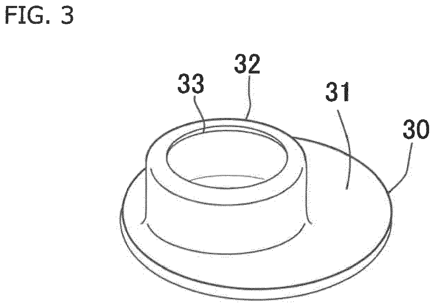

An overview of the expansion valve 1 in the present embodiment will be described with reference to FIG. 1 to FIG. 3. FIG. 1 is a diagram that schematically illustrates the entire configuration of an expansion valve 1 according to the present embodiment together with a pipe connected to an evaporator. It should be noted that, in FIG. 1, the portion corresponding to the power element 8 is illustrated in a side view, and the remaining portions are illustrated in a cross-sectional view. FIG. 2 is an enlarged view of an area AR around the orifice, where (a) is an enlarged view of the present embodiment, and (b) and (c) are enlarged views of the same portion in the comparative examples. FIG. 3 is a perspective view of the rectifier.

The expansion valve 1 comprises an aluminum valve main body 2 with a valve chamber VS, a valve body 3, a biasing member 4, an actuation rod 5, and a ring spring 6.

In addition to the valve chamber VS, the valve main body 2 includes a first flow path 21 and a second flow path 22. The first flow path 21 is, for example, a supply-side flow path (also referred to as an inlet flow path), and the valve chamber VS is supplied with fluids through the supply-side flow path. The second flow path 22 is, for example, a discharge-side flow path (also referred to as an outlet flow path), and the fluid in the valve chamber VS is discharged out of the expansion valve through the discharge-side flow path. Connected to the second flow path 22 is a pipe H1 which extends to and is connected to an evaporator (not illustrated in FIG. 1). On the outer periphery of the end of the pipe H1, an O-ring OR is arranged so as to abut against the inner wall of the second flow path 22, thereby preventing leakage of the refrigerant.

A rectifier 30 is disposed near the entrance of the second flow path 22 of the valve main body 2 so as to enter the pipe H1. As illustrated in FIG. 3, the rectifier 30 has a substantially top hat shape, and specifically, has a circular sheet portion 31 and a hollow cylindrically shaped hollow convex portion 32 integrally provided with the circular sheet portion 31, and an opening (also referred to as a throttle hole) 33 formed at the distal end of the hollow convex portion 32. It should be noted that the circular sheet portion 31 and the hollow convex portion 32 are eccentric to each other.

In the present embodiment, the rectifier 30 is formed by press-forming a plate material such as SUS, but the rectifier 30 may be formed of a resin. Alternatively, the circular sheet portion 31 and the hollow convex portion 32 may be separate bodies, which form the rectifier when joined together. The outer periphery of the circular sheet portion 31 is attached to the inner wall of the second flow path 22 by a method such as caulking or press-fitting.

In FIG. 1, when the outer diameter of the hollow convex portion 32 is defined as D2 and the inner diameter of the pipe H1 is defined as D1, the relationship D2≦D1 is satisfied. Accordingly, as illustrated in FIG. 1, the rectifier 30 can be assembled by causing the hollow convex portion 32 to enter into the interior of the pipe H1. However, in consideration of the assembly error with the pipe H1, it is more desirable to set a relationship of D2<D1 to ensure smooth assembly.

The valve body 3 is located in valve chamber VS. When the valve body 3 is seated on the valve seat 20 of the valve main body 2, the first flow path 21 and the second flow path 22 are not in communication with each other. On the other hand, when the valve body 3 is separated from the valve seat 20, the first flow path 21 and the second flow path 22 are in communication.

The biasing member 4 biases the valve body 3 towards the valve seat 20. The biasing member 4 is, for example, a coiled spring.

The lower end of the actuation rod 5 contacts the valve body 3. In addition, the actuation rod 5 can press the valve body 3 in the opening direction against the biasing force of the biasing member 4. When the actuation rod 5 moves downwards, the valve body 3 is separated from the valve seat 20 and the expansion valve 1 is opened.

The space from the small diameter orifice 27 located downstream of the valve seat 20 to the opening 33 of the rectifier 30 is referred to as expansion chamber EX. That is, the rectifier 30 partitions the expansion chamber EX and the second flow path 22. A bolt hole 25 used for fastening to another member is formed by interposing thin walls with respect to the expansion chamber EX.

The ring spring 6 is a vibration isolating member for suppressing the vibration of the actuation rod 5. The ring spring 6 is disposed between the outer peripheral surface 55 of the actuation rod 5 and the inner peripheral surface 26a of the valve main body 2. However, the ring spring 6 is not necessarily required.

A return flow path (also known as a return passage) 23 is formed in the upper portion of the valve main body 2. Connected to the return flow path 23 is a pipe H2 that extends from the evaporator (not illustrated in FIG. 1). On the outer periphery of the end of the pipe H2, an O-ring OR is arranged so as to abut against the inner wall of the return flow path 23, thereby preventing leakage of the refrigerant.

Next, the effect of the present embodiment will be described via comparison with a comparative example. First, in Comparative Example 1 illustrated in FIG. 2(b), the rectifier 30A is composed of only the circular sheet portion 31, and the circular sheet portion 31 has an opening 33. The opening 33 is made to have the same shape as the opening 33 of the rectifier 30. In addition, the volume of the expansion chamber EX is relatively small compared to the present embodiment.

Also, in Comparative Example 1 as illustrated in FIG. 2(b), using the so-called muffler effect, it is possible to reduce, to some extent, the passage noise emitted by the refrigerant after passing between the valve seat 20 and the valve body 3 and the orifice 27 at the time of valve opening.

On the other hand, as illustrated in Comparative Example 2 as illustrated in FIG. 2(c), even if the same rectifier 30A is used, the so-called muffler effect is enhanced by increasing the volume of the expansion chamber EX, and a larger passage noise reduction effect can be expected. However, when the bolt hole 25 is provided in the valve main body 2, for example, the volume of the expansion chamber EX is limited to avoid interference, and it is difficult to obtain a further reduction in passage noise.

Therefore, in the present embodiment, by using a rectifier 30 having the hollow convex portion 32 as illustrated in FIG. 2(a), the volume of the expansion chamber EX including the orifice can be further enlarged, and the so-called muffler effect can be further enhanced, so that a greater passage noise reduction effect can be expected. In particular, by inserting a portion of the hollow convex portion 32 into the pipe H1, it is possible to suppress interference with the pipe H1, and to maintain a compact outer shape of the valve main body 2 while increasing the volume of the expansion chamber EX. Such effects are of particular importance in the expansion valves used for car air conditioners and the like. It should be noted that the diameter and length of the hollow convex portion 32, the area and the shape of the opening 33, and the like can be selected to be optimal according to the specifications of the products. In addition, the diameter of the holes of the expansion chamber EX (the diameter perpendicular to the central axes of the hollow convex portion 32) is not limited to the size illustrated in FIG. 2(a), and can be any diameter.

### (Application Example of Expansion Valve 1)

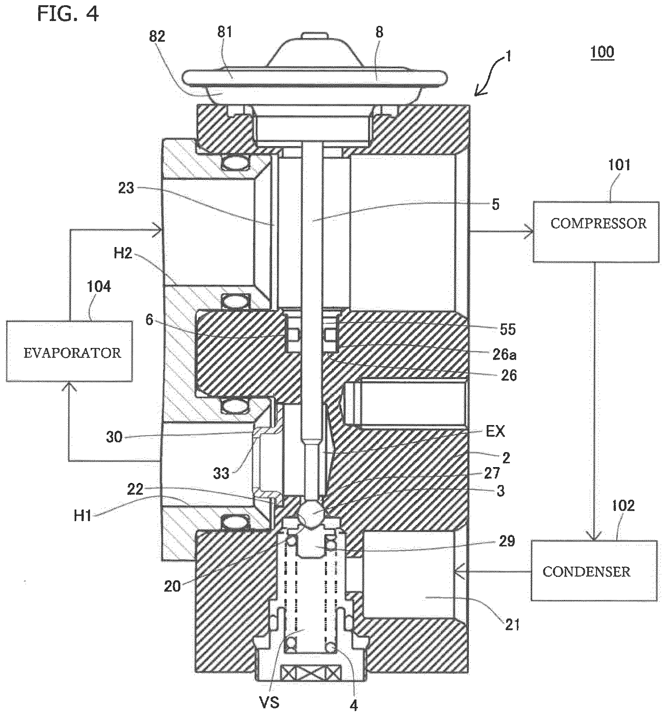

An application example of the expansion valve 1 will be described with reference to FIG. 4. FIG. 4 is a schematic cross-sectional view that schematically illustrates an example in which the expansion valve 1 in the above-described embodiment is applied to a refrigerant circulation system 100.

In the embodiment illustrated in FIG. 4, the expansion valve 1 is fluidly connected to a compressor 101, a condenser 102, and an evaporator 104.

In addition, the expansion valve 1 includes a power element 8 and a return flow path 23 in addition to the valve main body 2, the valve body 3, the biasing member 4, the actuation rod 5, the ring spring 6, the first flow path 21 and the second flow path 22. The valve body 3 and the valve seat 20 constitute a valve member, and the power element 8, the biasing member 4 and the actuation rod 5 constitute a valve member driving device.

Referring to FIG. 4, the refrigerant pressurized by the compressor 101 is liquefied by the condenser 102, and sent to the expansion valve 1. In addition, the refrigerant adiabatically expanded in the expansion valve 1 is delivered to the evaporator 104 through the pipe H1, and heat exchanged in the evaporator 104 with the air flowing around the evaporator. The refrigerant returning from the evaporator 104 is returned from the pipe H2 to the compressor 101 through the expansion valve 1 (more specifically, the return flow path 23).

Expansion valve 1 is supplied with high-pressure refrigerant from the condenser 102. More specifically, the high pressure refrigerant from the condenser 102 is supplied to the valve chamber VS via the first flow path 21. In the valve chamber VS, the valve body 3 is disposed opposite the valve seat 20. The valve body 3 is supported by a valve body support 29, and the valve body support 29 is biased upwardly by the biasing member 4, (for example, a coiled spring). In other words, the valve body 3 is biased by the biasing member 4 toward the valve closing direction. The biasing member 4 is disposed between the valve body support 29 and the biasing member receiving member 24. In the embodiment illustrated in FIG. 4, the biasing member receiving member 24 is a plug that is mounted on the valve main body 2 to seal the valve chamber VS.

When the valve body 3 is seated on the valve seat 20 (in other words, when the expansion valve 1 is in the closed state), the first flow path 21 on the upstream side of the valve chamber VS and the second flow path 22 on the downstream side of the valve chamber VS are not in communication with each other. On the other hand, when the valve body 3 is separated from the valve seat 20 (in other words, when the expansion valve 1 is in an open state), the refrigerant supplied to the valve chamber VS is delivered to the evaporator 104 through the second flow path 22. At this time, by entering the expansion chamber EX having a large volume after passing through the orifice 27 and then passing through the opening 33 of the rectifier 30, the passage noise is effectively reduced. The switching between the closed state and the open state of the expansion valve 1 is carried out by the actuation rod 5 connected to the power element 8.

In the embodiment illustrated in FIG. 4, the power element 8 is disposed at the upper end of the expansion valve 1. The power element 8 includes an upper lid member 81, a receiving member 82 that has an opening at its center, and a diaphragm (not illustrated in the figures) disposed between the upper lid member 81 and the receiving member 82. The first space surrounded by the upper lid member 81 and the diaphragm is filled with a working gas.

The lower surface of the diaphragm is connected to the actuation rod via a diaphragm support member. Therefore, when the working gas in the first space is liquefied, the actuation rod 5 moves upward, and when the liquefied working gas is vaporized, the actuation rod 5 moves downward. In this way, the switching between the open state and the closed state of the expansion valve 1 is carried out.

The second space between the diaphragm and the receiving member 82 is in communication with the return flow path 23. Therefore, the phase (gas phase, liquid phase, or the like) of the working gas in the first space changes in accordance with the temperature and pressure of the refrigerant flowing through the return flow path 23, and the actuation rod 5 is driven. In other words, in the expansion valve 1 illustrated in FIG. 4, the quantity of the refrigerant supplied from the expansion valve 1 to the evaporator 104 is automatically adjusted in accordance with the temperature and pressure of the refrigerant returning from the evaporator 104 to the expansion valve 1. In the embodiment illustrated in FIG. 4, the return flow path 23 communicates with the concave portion 26, and the concave portion 26 is disposed below the return flow path 23.

It should be noted that the present invention is not limited to the above-mentioned embodiments. Variations of any of the components of the embodiments described above are possible within the scope of the present invention, as long as they fall within the scope of the claims.

### [Reference Signs List]

- 1 :: expansion valve
- 2 :: valve main body
- 3 :: valve body
- 4 :: biasing member
- 5 :: actuation rod
- 6 :: ring spring
- 8 :: power element
- 20 :: valve seat
- 21 :: first flow path
- 22 :: second flow path
- 23 :: return flow path
- 24 :: biasing member receiving member
- 25 :: bolt hole
- 26 :: concave portion
- 27 :: orifice
- 30 :: rectifier
- 31 :: circular sheet portion
- 32 :: hollow convex portion
- 33 :: opening
- 100 :: refrigerant circulation system
- 101 :: compressor
- 102:: condenser
- 104 :: evaporator
- EX :: expansion chamber
- H1, H2:: pipe
- VS :: valve chamber

## Claims

1. An expansion valve (1) comprising:
a valve main body (2) including:
an inlet passage configured to introduce a high-pressure refrigerant,
a valve chamber (VS) configured to communicate with the inlet passage,
an expansion chamber (EX) that includes an orifice (27) configured to reduce a pressure of the refrigerant introduced into the valve chamber (VS), and
an outlet passage disposed downstream of the expansion chamber (EX) and configured to discharge the refrigerant that passes through the expansion chamber (EX);
a rectifier (30) disposed in the valve main body (2) and configured to partition the expansion chamber (EX) and the outlet passage;
a valve member configured to open and close the orifice (27); and
a valve member driving device configured to drive the valve member;
wherein the rectifier (30) has a substantially top hat shape and includes a circular sheet portion (31) and a hollow cylindrically shaped convex portion (32) projecting toward the outlet passage and integrally provided with the circular sheet portion (31), and a throttle hole (33) formed at a distal end of the hollow convex portion (32),
**characterized in that** the hollow convex portion (32) has an outer diameter (D2) smaller than an inner diameter (D1) of a pipe (H1) connected to the outlet passage,
the circular sheet portion (31) and the hollow convex portion (32) are eccentric to each other,
and the outer periphery of the circular sheet portion (31) is attached to the inner wall of the outlet passage by caulking or press-fitting.

2. The expansion valve according to claim 1, wherein:
at least a portion of the hollow convex portion (32) is disposed inside the pipe (H1).

3. The expansion valve according to any one of claims 1 to 2, wherein:
the rectifier (30) is formed by press forming a metallic plate.

## Patentansprüche

1. Entspannungsventil (1), umfassend:
einen Ventilhauptkörper (2), umfassend:
einen Einlasskanal, ausgebildet zur Einleitung eines Kältemittels unter Hochdruck,
eine Ventilkammer (VS), ausgebildet, um mit dem Einlasskanal zu kommunizieren,
eine Expansionskammer (EX), die eine Öffnung (27) umfasst, die dazu ausgebildet ist, einen Druck des in die Ventilkammer (VS) eingeleiteten Kältemittels zu reduzieren, und
einen Auslasskanal, der stromabwärts der Expansionskammer (EX) angeordnet ist und dazu ausgebildet ist, das Kältemittel auszulassen, welches die Expansionskammer (EX) durchströmt;
einen Rektifizierer (30), der in dem Ventilhauptkörper (2) angeordnet ist und dazu ausgebildet ist, die Expansionskammer (EX) und den Auslasskanal zu unterteilen;
ein Ventilelement, ausgebildet zum Öffnen und Schließen der Öffnung (27); und
eine Ventilelement-Antriebseinrichtung, ausgebildet zum Antreiben des Ventilelements;
wobei der Rektifizierer (30) im Wesentlichen die Form eines Zylinderhuts hat und einen kreisförmigen Scheibenteil (31) und einen hohlen zylindrischen konvexen Teil (32) umfasst, der in Richtung des Auslasskanals vorspringt und einteilig mit dem kreisförmigen Scheibenteil (31) ausgebildet ist, sowie eine Drosselöffnung (33) an einem äußeren Ende des hohlen konvexen Teils (32),
**dadurch gekennzeichnet, dass** der hohle konvexe Teil (32) einen äußeren Durchmesser (D2) aufweist, der kleiner ist als ein Innendurchmesser (D1) eines Rohrs (H1), das an den Auslasskanal angeschlossen ist,
dass der kreisförmige Scheibenteil (31) und der hohle konvexe Teil (32) exzentrisch zueinander angeordnet sind,
und dass der äußere Umfang des kreisförmigen Scheibenteils (31) an der Innenwand des Auslasskanals durch Verstemmen oder Verpressen befestigt ist.

2. Entspannungsventil gemäß Anspruch 1,
bei welchem zumindest ein Teil des hohlen konvexen Teils (32) innerhalb des Rohrs (H1) angeordnet ist.

3. Entspannungsventil gemäß einem der Ansprüche 1 bis 2,
bei welchem der Rektifizierer (30) durch Pressformen einer Metallplatte hergestellt wird.

## Revendications

1. Soupape de détente (1) comportant :
un corps principal de soupape (2) incluant :
un passage d'entrée configuré pour introduire un fluide frigorigène à haute pression,
une chambre de soupape (VS) configurée pour communiquer avec le passage d'entrée,
une chambre de détente (EX) qui inclut un orifice (27) configuré pour réduire une pression du fluide frigorigène introduit dans la chambre de soupape (VS), et
un passage de sortie disposé en aval de la chambre de détente (EX) et configuré pour évacuer le fluide frigorigène qui passe à travers la chambre de détente (EX) ;
un rectificateur (30) disposé dans le corps principal de soupape (2) et configuré pour cloisonner la chambre de détente (EX) et le passage de sortie ;
un élément de soupape configuré pour ouvrir et fermer l'orifice (27) ; et
un dispositif d'entraînement d'élément de soupape configuré pour entraîner l'élément de soupape ;
dans laquelle le rectificateur (30) a sensiblement une forme de chapeau haut-de-forme et inclut une partie de tôle circulaire (31) et une partie convexe formée cylindriquement creuse (32) faisant saillie vers le passage de sortie et agencée d'un seul tenant avec la partie de tôle circulaire (31), et un trou d'étranglement (33) formé sur une extrémité distale de la partie convexe creuse (32),
**caractérisée en ce que** la partie convexe creuse (32) a un diamètre extérieur (D2) inférieur à un diamètre intérieur (D1) d'un tuyau (H1) raccordé au passage de sortie,
la partie de tôle circulaire (31) et la partie convexe creuse (32) sont excentrées l'une par rapport à l'autre,
et la périphérie extérieure de la partie de tôle circulaire (31) est fixée à la paroi intérieure du passage de sortie par matage ou emmanchement serré.

2. Soupape de détente selon la revendication 1, dans laquelle :
au moins une partie de la partie convexe creuse (32) est disposée à l'intérieur du tuyau (H1).

3. Soupape de détente selon l'une quelconque des revendications 1 à 2, dans laquelle :
le rectificateur (30) est formé par formage d'une plaque métallique à la presse.
